# EUROPEAN PATENT APPLICATION

(11) **EP 4 675 753 A1**
(43) Date of publication of application: **07.01.2026**
(21) Application number: 25186423.7
(22) Date of filing: 30.06.2025
(51) Int. Cl.: H01M 10/42, H01M 10/48, H01M 10/653, H01M 50/204

(54) **BATTERY PACK AND ELECTRIC DEVICE**

(30) Priority: 02.07.2024 CN 202410881110
(71) Applicant: Xiamen Ampack Technology Limited, Xiamen City, Fujian Province, 361000 (CN)
(72) Inventor: LIAO, Xubin, Xiamen City, Fujian Province, China, 361000 (CN)
(74) Representative: Icosa

(57) **Abstract**

A battery pack(100) includes a housing(10), a battery module(20), an insulator(30), and a thermally conductive adhesive(40). The insulator(30) is provided with a first space(30a), at least a portion of the battery module(20) is accommodated in the first space(30a), and both the insulator(30) and the battery module(20) are disposed in the housing(10). The thermally conductive adhesive(40) is disposed in the first space(30a), the thermally conductive adhesive(40) is formed by curing a flowable thermally conductive material injected into the first space(30a), and the thermally conductive adhesive(40) is connected to the insulator(30) and the battery module(20).

## Description

### TECHNICAL FIELD

This application relates to the field of energy storage technologies, and in particular, to a battery pack and an electric device.

### BACKGROUND

In the related art, a battery module is provided in a housing of a battery pack, and the housing is filled with an adhesive when the battery module is assembled. When the battery module needs to be disassembled, problems such as difficult adhesive removal and battery module disassembly exist.

### SUMMARY

In view of the above situation, this application provides a battery pack which is conducive to disassembling a battery module, and an electric device.

A first aspect of this application provides a battery pack. The battery pack includes a housing, a battery module, an insulator, and a thermally conductive adhesive. The insulator is provided with a first space, at least a portion of the battery module is accommodated in the first space, and both the insulator and the battery module are disposed in the housing. The thermally conductive adhesive is disposed in the first space, the thermally conductive adhesive is configured to be formed by curing a flowable thermally conductive material injected into the first space, and the thermally conductive adhesive is connected to the insulator and the battery module.

In the above embodiment, the thermally conductive adhesive formed by curing the flowable thermally conductive material is disposed in the first space, such that the thermally conductive adhesive is connected to the insulator and the battery module, the thermally conductive adhesive plays a role in transferring heat away from the battery module, which is conducive to improving heat dissipation of the battery module, and the thermally conductive adhesive wrap the battery module, which is conducive to improving vibration-resistant performance and temperature uniformity performance of the battery pack. Moreover, since the insulator is not tightly bonded to an inner wall of the housing, when the battery module needs to be disassembled, the insulator and the battery module can be disassembled from the housing without destroying the thermally conductive adhesive, which is conducive to improving disassembly efficiency of the battery module and the insulator.

In one or more embodiments of this application, the battery pack includes a heating apparatus, the heating apparatus is disposed in the housing, and at least a portion of the heating apparatus is disposed in the first space.

In the above embodiment, the heating apparatus is capable of warming and heating the battery pack in a low-temperature operation condition, which is conducive to reducing a risk of lithium plating in the battery pack and a possibility of triggering low-voltage protection of a battery cell, and is conducive to improving safety of the battery pack and charging and discharging energy of the battery pack.

In one or more embodiments of this application, the thermally conductive adhesive is connected to the heating apparatus.

In the above embodiment, the heating apparatus is connected to the thermally conductive adhesive, such that the thermally conductive adhesive transfers heat generated by the heating apparatus to the battery module, which is conducive to improving heat transfer efficiency and effect of uniformly heating the battery module.

In one or more embodiments of this application, the battery pack includes a first circuit board, the first circuit board is connected to the battery module, and the first circuit board is connected to the heating apparatus.

In the above embodiment, the first circuit board controls an operation state of the heating apparatus, which is conducive to automatically adjusting temperature of the battery pack, thereby being conducive to improving use reliability of the battery pack.

In one or more embodiments of this application, the battery module includes a first battery group, and the first battery group includes a plurality of first batteries. The first battery group and the heating apparatus are arranged along a first direction, the first circuit board and the first battery group are arranged along a second direction, and the second direction is perpendicular to the first direction.

In the above embodiment, the heating apparatus and the first circuit board are located on different sides of the first battery group, which is conducive to reducing influence of the heating apparatus on the first circuit board, and is conducive to improving the safety of the battery pack.

In one or more embodiments of this application, the battery module includes a second battery group, and the second battery group includes a plurality of second batteries. Along the first direction, at least a portion of the heating apparatus is disposed between the first battery group and the second battery group. The thermally conductive adhesive is connected to the first battery group and the second battery group.

In the above embodiment, the heating apparatus is disposed between the first battery group and the second battery group along the first direction, which is conducive to making the first battery group and the second battery group more uniformly heated, and is conducive to improving the temperature uniformity effect. The first battery group and the second battery group are both connected to the thermally conductive adhesive, which is conducive to further improving heat conduction efficiency among the heating apparatus, the first battery group and the second battery group.

In one or more embodiments of this application, the insulator wraps at least a portion of the battery module and at least a portion of the heating apparatus. The insulator includes a first portion, a second portion, and a third portion sequentially arranged along the second direction, along the second direction, the first portion is located on a side of the battery module, the third portion is located on a side that is of the battery module and that is back away from the first portion, and the first portion, the second portion and the third portion enclose to form the first space.

In the above embodiment, the insulator wraps at least a portion of the battery module and at least a portion of the heating apparatus, which is conducive to binding the battery module, the heating apparatus and the thermally conductive adhesive, improving stability of the connection among the battery module, the heating apparatus and the thermally conductive adhesive, allowing the thermally conductive adhesive to maintain a shape before curing, reducing a risk of adhesive overflowing, and reducing a risk of the insulator falling off from the battery module.

In one or more embodiments of this application, the insulator wraps at least a portion of the battery module, at least a portion of the heating apparatus and at least a portion of the first circuit board. The insulator includes a first portion, a second portion, and a third portion sequentially arranged along the second direction, along the second direction, the first portion is located on a side that is of the first circuit board and that is back away from the battery module, the third portion is located on a side that is of the battery module and that is back away from the first circuit board, and the first portion, the second portion, and the third portion enclose to form the first space.

In the above embodiment, the insulator wraps at least a portion of the battery module, at least a portion of the heating apparatus and at least a portion of the first circuit board, which is conducive to binding the battery module, the heating apparatus, the first circuit board and the thermally conductive adhesive, improving the stability of the connection among the battery module, the heating apparatus, the first circuit board and the thermally conductive adhesive, allowing the thermally conductive adhesive to maintain the shape before curing, reducing the risk of adhesive overflowing, and reducing the risk of the insulator falling off from the battery module.

In one or more embodiments of this application, the first portion and a portion of an edge of the first circuit board enclose to form a first through hole, the first portion and an other portion of the edge of the first circuit board enclose to form a second through hole, and the first through hole and the second through hole both communicate with an interior and an exterior of the first space.

In the above embodiment, the first through hole and the second through hole are provided for filling the flowable thermally conductive material into the first space, and also for high-temperature gas in the first space to be discharged, thereby being conducive to filling the adhesive and relieving the pressure.

In one or more embodiments of this application, the insulator includes a first opening and a second opening arranged along the second direction, and the first opening and the second opening both communicate with the first space. The battery pack further includes a structural component, and the structural component is connected to the insulator and seals the second opening.

In the above embodiment, the first opening and the second opening provided are conducive to realizing the wrapping of the insulator to the battery module, the first opening is conducive to providing access to structures such as connecting wires used by the battery module for being connected to other components, and the structural component seals the second opening, which is conducive to reducing the probability of overflowing of the thermally conductive adhesive.

In one or more embodiments of this application, the first battery group includes a plurality of first battery assemblies, the plurality of first battery assemblies are arranged along a third direction, each first battery assembly includes a plurality of first batteries arranged along the second direction, and the first direction, the second direction, and the third direction are perpendicular to one another. Along an opposite direction of the second direction, the thermally conductive adhesive does not extend beyond the first batteries of the first battery assemblies that are closest to the first circuit board.

In the above embodiment, the thermally conductive adhesive does not extend beyond the first batteries closest to the first circuit board along the opposite direction of the second direction, which is conducive to reducing weight on one hand, and reducing the risk of adhesive overflowing on the other hand.

In one or more embodiments of this application, the battery pack includes a connecting piece and a temperature sensor, and the connecting piece is connected to the first circuit board and the temperature sensor.

In the above embodiment, the first circuit board can control the operation of the heating apparatus according to received detection information of the temperature sensor, which is conducive to realizing automatic adjustment of the heating apparatus.

In one or more embodiments of this application, the first circuit board and the battery module are arranged along the second direction. Along the second direction, the temperature sensor is disposed between the battery module and the first circuit board.

In the above embodiment, the temperature sensor is disposed between the battery module and the first circuit board, which is conducive to reducing a risk of the temperature sensor being subjected to impact and extrusion, and improving protection for the temperature sensor.

In one or more embodiments of this application, the battery module includes a first battery group and connected first and second holders, the first battery group includes a plurality of first batteries, and the first holder and the second holder are arranged along the first direction. The plurality of first batteries are disposed between the first holder and the second holder, and any two adjacent first batteries are separated. The temperature sensor is disposed between two adjacent first batteries, and along the opposite direction of the second direction, the temperature sensor does not extend beyond the first holder and the second holder.

In the above embodiment, the temperature sensor does not extend beyond the first holder and the second holder along the opposite direction of the second direction, and when the battery pack and other components collide and impact, the first holder and the second holder make contact with other components prior to the temperature sensor, which is further conducive to reducing a risk of the temperature sensor being subjected to impact and extrusion, and improving the protection for the temperature sensor.

In one or more embodiments of this application, the temperature sensor is connected to the thermally conductive adhesive.

In the above embodiment, the temperature sensor is connected to the thermally conductive adhesive, which is conducive to improving a temperature measurement accuracy.

In one or more embodiments of this application, the battery module includes a first battery group, and the first battery group includes a plurality of first batteries. The heating apparatus includes an insulation film, a resistance wire, and a current interruption assembly. The first battery group and the insulation film are arranged along a first direction. At least a portion of the resistance wire is disposed in the insulation film, and the resistance wire is connected to the first circuit board. The current interruption assembly is connected to the resistance wire, and the current interruption assembly is configured to disconnect in response to a temperature of the battery module reaching a first threshold, so as to interrupt a connection of the resistance wire and the first circuit board.

In one or more embodiments of this application, the battery pack further includes a resilient member, and the resilient member is disposed between the housing and the insulator.

In the above embodiment, the resilient member is conducive to playing a role in buffering the battery pack and protecting the battery pack.

In one or more embodiments of this application, the insulator includes a heat shrinkable film.

In the above embodiment, the insulator includes the heat shrinkable film, and the heat shrinkable film is not tightly bonded to the inner wall of the housing, which is conducive to disassembling the insulator and the battery module from the housing without destroying the thermally conductive adhesive when required, and improving disassembly efficiency of the battery module and the insulator.

A second aspect of this application provides an electric device, including the battery pack according to any one of the above embodiments.

In the above embodiment, the disassembly efficiency of the battery pack is improved, which is conducive to replacing the battery module or the housing in the electric device and improving user experience.

The battery pack of this application includes a housing, a battery module, an insulator and a thermally conductive adhesive. The insulator is provided with a first space, at least a portion of the battery module is accommodated in the first space, and both the insulator and the battery module are disposed in the housing. The thermally conductive adhesive is disposed in the first space, the thermally conductive adhesive is configured to be formed by curing a flowable thermally conductive material injected into the first space, and the thermally conductive adhesive is connected to the insulator and the battery module. The thermally conductive adhesive formed by curing the flowable thermally conductive material is disposed in the first space, such that the thermally conductive adhesive is connected to the insulator and the battery module, the thermally conductive adhesive plays a role in transferring heat away from the battery module, which is conducive to improving heat dissipation of the battery module, and the thermally conductive adhesive wraps the battery module, which is conducive to improving the vibration-resistant performance and the temperature uniformity performance of the battery pack. Moreover, since the insulator is not tightly bonded to the inner wall of the housing, when the battery module needs to be disassembled, the insulator and the battery module can be disassembled from the housing without destroying the thermally conductive adhesive, which is conducive to improving the disassembly efficiency of the battery module and the insulator.

### BRIEF DESCRIPTION OF DRAWINGS

FIG. 1 is a schematic structural diagram of a battery pack according to an embodiment of this application.
FIG. 2 is a schematic exploded view of the battery pack shown in FIG. 1.
FIG. 3 is a schematic exploded view of a partial structure of the battery pack shown in FIG. 2.
FIG. 4 is a schematic diagram of a heating apparatus according to an embodiment of this application.
FIG. 5 is a schematic diagram of a partial structure of the battery pack according to an embodiment of this application.
FIG. 6 is a schematic exploded view of the partial structure of the battery pack shown in FIG. 5.
FIG. 7 is a schematic exploded view of a partial structure of the battery pack according to an embodiment of this application.
FIG. 8 is a partial schematic diagram of the battery pack according to an embodiment of this application.
FIG. 9 is another partial schematic diagram of the battery pack according to an embodiment of this application.
FIG. 10 is a schematic diagram of the partial structure of the battery pack shown in FIG. 9 from another perspective.
FIG. 11 is a schematic structural diagram of yet another portion according to an embodiment of this application.
FIG. 12 is a schematic structural diagram of an electric device according to an embodiment of this application.

**List of reference numerals:**

| | |
|---|---|
| Battery pack | 100 |
| Housing | 10 |
| First wall | 11 |
| Second wall | 12 |
| Third wall | 13 |
| Fourth wall | 14 |
| Fifth wall | 15 |
| Sixth wall | 16 |
| Tank | 101 |
| Cover | 102 |
| Battery module | 20 |
| First battery group | 21 |
| First battery assembly | 211 |
| First battery | 2111 |
| Second battery group | 22 |
| Second battery assembly | 221 |
| Second battery | 2211 |
| First holder | 23 |
| Second holder | 24 |
| Third holder | 25 |
| Fourth holder | 26 |
| First busbar | 271 |
| Second busbar | 272 |
| First separation piece | 28 |
| Second separation piece | 29 |
| Insulator | 30 |
| First portion | 31 |
| Second portion | 32 |
| Third portion | 33 |
| First space | 30a |
| First opening | 30b |
| Second opening | 30c |
| Thermally conductive adhesive | 40 |
| Heating apparatus | 50 |
| Insulation film | 51 |
| Resistance wire | 52 |
| Current interruption assembly | 53 |
| First circuit board | 60 |
| First through hole | 61 |
| Second through hole | 62 |
| Structural component | 103 |
| connecting piece | 70 |
| Temperature sensor | 80 |
| Resilient member | 90 |
| First direction | X |
| Second direction | Y |
| Third direction | Z |
| Device body | 200 |
| Electric device | 1000 |

### DETAILED DESCRIPTION

The following describes the technical solutions in some embodiments of this application with reference to the drawings hereof. Evidently, the described embodiments are merely a part of but not all of the embodiments of this application.

It is hereby noted that unless otherwise expressly specified, the terms "mount", "concatenate", "connect" and "fix" are understood in a broad sense. For example, a "connection" may be a fixed connection, a detachable connection, or an integrated connection; or may be a mechanical connection, or an electrical connection. A component considered to be "connected to" another component may be directly connected to the other component or may be connected to the other component through an intermediate component. A component considered to be "disposed on" another component may be directly disposed on the other component or may be disposed on the other component through an intermediate component.

The terms such as "top", "bottom", "up", "down", "left", "right", "front", and "back" and other similar expressions used herein are merely for ease of description.

Unless otherwise expressly specified, the term "a plurality of" as used herein means two or more.

The terms "first", "second", and the like are merely used to distinguish between different objects, and shall not be construed as any indication or implication of relative importance or any implicit indication of the quantity, particular sequence or primary-secondary relationship of the technical features indicated.

The term "perpendicular" is a description of an ideal state between two components. In the actual production or use state, one component may be approximately perpendicular to another component. For example, numerically, the term "perpendicular" may represent an angle of 90°±10° between two straight lines, or a dihedral angle of 90°±10° between two planes, or an angle of 90°±10° between a straight line and a plane.

Unless otherwise defined, all technical and scientific terms used herein bear the same meanings as what is normally understood by a person skilled in the technical field of this application. The terms used in the specification of this application are merely intended to describe specific embodiments but not to limit this application.

In the related art, a battery module is provided in a housing of a battery pack, and the housing is filled with an adhesive when the battery module is assembled. When the battery module needs to be disassembled, problems such as difficult adhesive removal and battery module disassembly exist.

This application discloses a battery pack. The battery pack includes a housing, a battery module, an insulator, and a thermally conductive adhesive. The insulator is provided with a first space, at least a portion of the battery module is accommodated in the first space, and both the insulator and the battery module are disposed in the housing. The thermally conductive adhesive is disposed in the first space, the thermally conductive adhesive is configured to be formed by curing a flowable thermally conductive material injected into the first space, and the thermally conductive adhesive is connected to the insulator and the battery module.

The thermally conductive adhesive formed by curing the flowable thermally conductive material is disposed in the first space, such that the thermally conductive adhesive is connected to the insulator and the battery module, the thermally conductive adhesive plays a role in transferring heat away from the battery module, which is conducive to improving heat dissipation of the battery module, and the thermally conductive adhesive wraps the battery module, which is conducive to improving vibration-resistant performance and temperature uniformity performance of the battery pack. Moreover, since the insulator is not tightly bonded to an inner wall of the housing, when the battery module needs to be disassembled, the insulator and the battery module can be disassembled from the housing without destroying the thermally conductive adhesive, which is conducive to improving disassembly efficiency of the battery module and the insulator.

Some embodiments of this application will be described below in conjunction with the accompanying drawings. To the extent that no conflict occurs, the following embodiments and the features in the embodiments may be combined with each other.

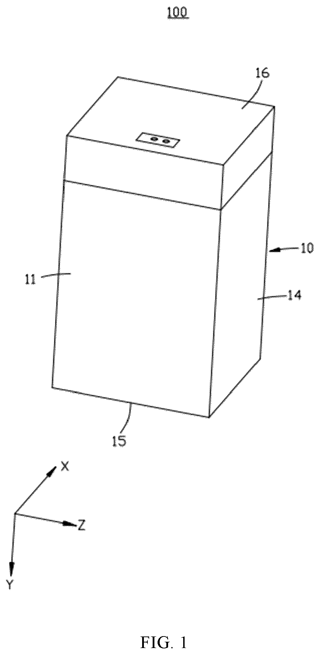

Referring to FIG. 1 to FIG. 3, an embodiment of this application provides a battery pack 100. The battery pack 100 includes a housing 10 and a battery module 20, and the battery module 20 is disposed in the housing 10.

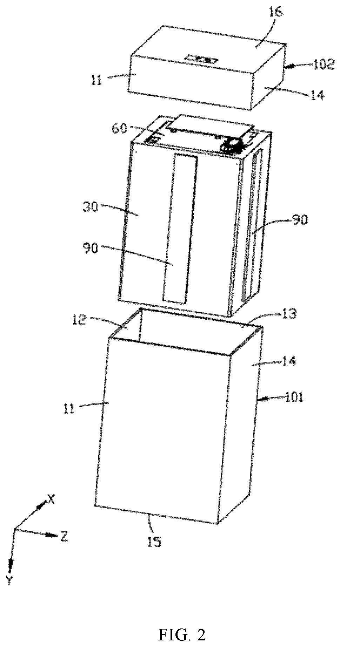

In some embodiments, referring to FIG. 1 and FIG. 2, the housing 10 includes a first wall 11, a second wall 12, a third wall 13, a fourth wall 14, a fifth wall 15, and a sixth wall 16. The first wall 11 and the third wall 13 are disposed opposite each other along a first direction X, the sixth wall 16 and the fifth wall 15 are disposed opposite each other along a second direction Y, the second wall 12 and the fourth wall 14 are disposed opposite each other along a third direction Z, and the first direction X, the second direction Y, and the third direction Z are perpendicular to one another.

In some embodiments, the first wall 11, the second wall 12, the third wall 13, and the fourth wall 14 are connected in sequence, the fifth wall 15 is connected to the first wall 11, the second wall 12, the third wall 13, and the fourth wall 14, and the sixth wall 16 is connected to the first wall 11, the second wall 12, the third wall 13, and the fourth wall 14.

In some embodiments, referring to FIG. 2, the housing 10 includes a tank 101 and a cover 102, and the tank 101 and the cover 102 are connected and enclose to form a space for accommodating the battery module 20.

In some embodiments, along the second direction Y, the portion of the tank 101 back away from the cover 102 includes the fifth wall 15, and the portion of the cover 102 back away from the tank 101 includes the sixth wall 16. The tank 101 and the cover 102 form the first wall 11, the second wall 12, the third wall 13, and the fourth wall 14.

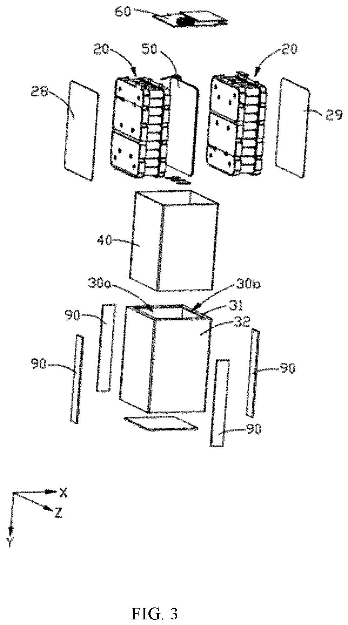

In some embodiments, referring to FIG. 3, the battery module 20 includes a plurality of batteries (not shown), and the plurality of batteries are assembled into a group by connection structures. The plurality of batteries may be connected in series or in parallel or in series-parallel, without specific limitation herein.

In some embodiments, referring to FIG. 2 and FIG. 3, the battery pack 100 includes an insulator 30, the insulator 30 is provided with a first space 30a, at least a portion of the battery module 20 is accommodated in the first space 30a, and the insulator 30 is disposed in the housing 10. The insulator 30 is conducive to limiting movement of the plurality of batteries in the battery module 20 and also conducive to insulating the battery module 20 from the housing 10.

In some embodiments, referring to FIG. 2 and FIG. 3, the battery pack 100 includes a thermally conductive adhesive 40, the thermally conductive adhesive 40 is disposed in the first space 30a, the thermally conductive adhesive 40 is configured to be formed by curing a flowable thermally conductive material injected into the first space 30a, and the thermally conductive adhesive 40 is connected to the insulator 30 and the battery module 20.

In some embodiments, the thermal conductive material includes polyurethane, epoxy resin, silica gel, and the like. The flowable thermally conductive material is in a state where the above material is a fluid.

The thermally conductive adhesive 40 formed by curing the flowable thermally conductive material is disposed in the first space 30a, such that the thermally conductive adhesive 40 is connected to the insulator 30 and the battery module 20, and the thermally conductive adhesive 40 plays a role in transferring heat away from the battery module 20, which is conducive to improving heat dissipation of the battery module 20. Moreover, when the battery module 20 needs to be disassembled, the insulator 30 and the battery module 20 can be disassembled from the housing 10 without destroying the thermally conductive adhesive 40, which is conducive to improving the disassembly efficiency of the battery module 20 and the insulator 30.

In some embodiments, the thermally conductive adhesive 40 is poured into the first space 30a by means of infusion, and the thermally conductive adhesive 40 is connected to the plurality of batteries of the battery module 20, which is conducive to reducing temperature difference between various parts of the battery module 20, and improving temperature uniformity.

In some embodiments, the thermal conductivity of the thermally conductive adhesive 40 is greater than the thermal conductivity of air.

In some embodiments, referring to FIG. 3, the battery pack 100 includes a heating apparatus 50, the heating apparatus 50 is disposed in the housing 10, and at least a portion of the heating apparatus 50 is disposed in the first space 30a.

It should be understood that there are challenges to performance and life of the battery pack 100 when the battery pack 100 is charged and discharged in a low-temperature operation condition. The heating apparatus 50 is capable of warming and heating the battery pack 100 in the low-temperature operation condition, which is conducive to reducing a risk of lithium plating in the battery pack 100 and possibility of triggering the low-voltage protection of a battery cell, and is conducive to improving safety of the battery pack 100 and charging and discharging energy of the battery pack 100.

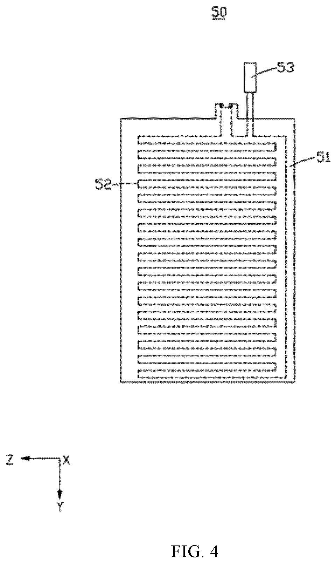

In some embodiments, referring to FIG. 4, the heating apparatus 50 includes an insulation film 51, a resistance wire 52, and a current interruption assembly 53. At least a portion of the resistance wire 52 is disposed in the insulation film 51, the resistance wire 52 is electrically connected to the battery module 20, the battery module 20 powers the heating apparatus 50, the current interruption assembly 53 is connected to the resistance wire 52, and the current interruption assembly 53 is configured to disconnect in response to a temperature of the battery module 20 reaching a first threshold, so as to interrupt an electrical connection of the resistance wire 52 and the first circuit board 20. The current interruption assembly 53 recovers a connection when the temperature of the battery module 20 is lower than a second threshold so as to recover an electrical connection of the resistance wire 52 and the battery module 20, and the resistance wire 52 warms up to continue heating the battery module 20. In some embodiments, the second threshold is less than the first threshold.

The insulation film 51 is conducive to insulating the resistance wire 52 from the battery module 20, which is conducive to improving safety of the battery module 20. When the resistance wire 52 is all disposed in the insulation film 51, a contact area of the insulation film 51 and the battery module 20 is larger than a heat generation area of the resistance wire 52, such that heat generated by the resistance wire 52 is conducted through the insulation film 51, which is conducive to improving the heating efficiency and uniformity of the heating apparatus 50 for the battery module 20. The current interruption assembly 53 is conducive to improving the safety of the battery pack 100, and reducing a risk of the safety problems of the battery pack 100 caused by too high heating temperature.

In some embodiments, the heating apparatus 50 is connected to the thermally conductive adhesive 40, such that the thermally conductive adhesive 40 transfers the heat generated by the heating apparatus 50 to the battery module 20, which is conducive to improving heat transfer efficiency.

In some embodiments, referring to FIG. 2 and FIG. 3, the battery pack 100 includes a first circuit board 60, the first circuit board 60 is connected to the battery module 20, and the first circuit board 60 is connected to the heating apparatus 50. The first circuit board 60 is configured to control an operation state of the heating apparatus 50, which is conducive to automatically adjusting temperature of the battery pack 100, thereby being conducive to improving use reliability of the battery pack 100.

In some embodiments, the first circuit board 60 is configured to control the heating apparatus 50 to heat and stop heating.

For example, when the temperature of the battery module 20 is greater than or equal to a certain temperature (e.g., 45°C), the first circuit board 60 controls the heating apparatus 50 to stop heating.

For another example, when the temperature of the battery module 20 is lower than a certain temperature (e.g., 35°C), the first circuit board 60 controls the heating apparatus 50 to heat.

In some embodiments, the first circuit board 60 is configured to control heating amount of the heating apparatus 50, which is conducive to playing a role in preserving heat of the battery pack 100. For example, the first circuit board 60 controls heating power of the heating apparatus 50 when the temperature of the battery module 20 is greater than or equal to a certain temperature (e.g., 40°C) to be lower than the heating power of the heating apparatus when the temperature of the battery module 20 is lower than the temperature (e.g., 40°C).

In some embodiments, referring to FIG. 3 and FIG. 4, the heating apparatus 50 includes the insulation film 51, the resistance wire 52 and the current interruption assembly 53. The resistance wire 52 is connected to the first circuit board 60, and the battery module 20 supplies power to the resistance wire 52 through the first circuit board 60, causing the resistance wire 52 to generate heat. For the current interruption assembly 53, when the temperature of the battery module 20 reaches the first threshold, the first circuit board 60 controls the heating apparatus 50 to stop heating, specifically, the first circuit board 60 controls the current interruption assembly 53 to disconnect the resistance wire 52 from the first circuit board 60.

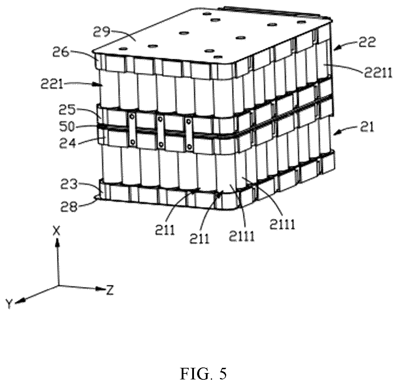

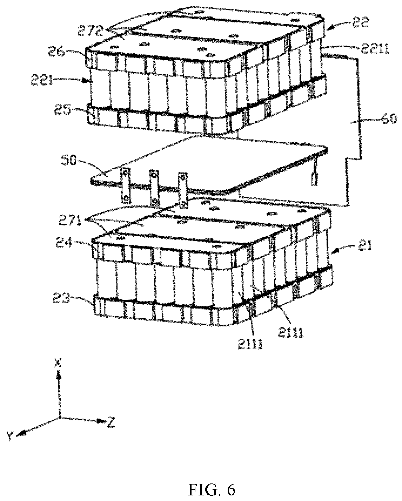

In some embodiments, referring to FIG. 5 and FIG. 6, the battery module 20 includes a first battery group 21, and the first battery group 21 includes a plurality of first batteries 2111. The plurality of first batteries 2111 are connected in series or in parallel or in series-parallel.

In some embodiments, the thermally conductive adhesive 40 is connected to the plurality of first batteries 2111.

In some embodiments, the first battery group 21 includes a plurality of first battery assemblies 211, the plurality of first battery assemblies 211 are arranged along the third direction Z, and each first battery assembly 211 includes a plurality of first batteries 2111 arranged along the second direction Y.

In some embodiments, each first battery 2111 is a cylindrical battery, and the first battery 2111 includes a cylindrical housing (not shown) and an electrode assembly (not shown) disposed in the cylindrical housing. The cylindrical housing is capable of conducting electricity, and the electrode assembly includes a separator, and first electrode plates and second electrode plates with different polarities. The separator is disposed between the first electrode plate and the second electrode plate, and configured to separating the first electrode plate from the second electrode plate. One of the first electrode plate and the second electrode plate is a negative electrode plate, and the other is a positive electrode plate, and the first electrode plate and the second electrode plate are connected to different parts of the cylindrical housing, thereby allowing the cylindrical housing to draw out polarities of the electrode assembly.

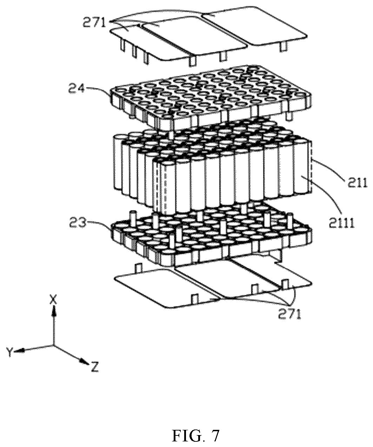

In some embodiments, referring to FIG. 5 to FIG. 7, the battery module 20 includes a first holder 23 and a second holder 24 connected to each other, the first holder 23 and the second holder 24 are arranged along the first direction X, and the plurality of first battery assemblies 211 are disposed between the first holder 23 and the second holder 24. One ends of the plurality of first batteries 2111 are connected to the first holder 23, the other ends of the plurality of first batteries 2111 are connected to the second holder 24, and any two adjacent first batteries 2111 are separated. The first holder 23 and the second holder 24 are conducive to limiting movement of the first batteries 2111, improving installation stability of the first batteries 2111, and protecting the first batteries 2111.

In some embodiments, referring to FIG. 5 to FIG. 7, the plurality of first batteries 2111 are connected in series or in parallel through first busbars 271. Along the first direction X, one side that is of the first holder 23 and that is back away from the first batteries 2111 and one side that is of the second holder 24 and that is back away from the first batteries 2111 are provided with the first busbars 271, and the first busbars 271 are in contact connection with the first batteries 2111.

In some embodiments, the first busbars 271 are made of conductive metal.

In some embodiments, referring to FIG. 5 and FIG. 6, the first battery group 21 and the heating apparatus 50 are arranged along the first direction X, and the first circuit board 60 and the first battery group 21 are arranged along the second direction Y. The heating apparatus 50 and the first circuit board 60 are located on different sides of the first battery group 21, which is conducive to reducing influence of the heating apparatus 50 on the first circuit board 60, and is conducive to improving the safety of the battery pack 100.

In the embodiments where the heating apparatus 50 includes the insulation film 51, the resistance wire 52 and the current interruption assembly 53, the first battery group 21 and the insulation film 51 are arranged along the first direction X.

In some embodiments, referring to FIG. 5 and FIG. 6, the battery module 20 includes a second battery group 22, and the second battery group 22 includes a plurality of second batteries 2211. The plurality of second batteries 2211 are connected in series or in parallel.

In some embodiments, the thermally conductive adhesive 40 is connected to the plurality of second batteries 2211.

In some embodiments, the second battery group 22 includes a plurality of second battery assemblies 221, the plurality of second battery assemblies 221 are arranged along the third direction Z, and each second battery assembly 221 includes a plurality of second batteries 2211 arranged along the second direction Y.

In some embodiments, each second battery 2211 is a cylindrical battery, and the structure of the second battery 2211 may be referred to the above embodiments regarding the cylindrical first battery 2111, and will not be repeated herein.

In some embodiments, referring to FIG. 5 and FIG. 6, the battery module 20 includes a third holder 25 and a fourth holder 26 connected to each other, the third holder 25 and the fourth holder 26 are arranged along the first direction X, a plurality of second battery assemblies 221 are disposed between the third holder 25 and the fourth holder 26, one ends of the plurality of second batteries 2211 are connected to the third holder 25, the other ends of the plurality of second batteries 2211 are connected to the fourth holder 26, and any two adjacent second batteries 2211 are separated. The third holder 25 and the fourth holder 26 are conducive to limiting movement of the second batteries 2211, improving installation stability of the second batteries 2211, and protecting the second batteries 2211.

In some embodiments, referring to FIG. 5 to FIG. 7, the plurality of second batteries 2211 are connected in series or in parallel through second busbars 272. Along the first direction X, one side that is of the third holder 25 and that is back away from the second batteries 2211 and one side that is of the fourth holder 26 and that is back away from the second batteries 2211 are provided with the second busbars 272, and the second busbars 272 are in contact connection with the second batteries 2211.

In some embodiments, the second busbars 272 are made of conductive metal.

In some embodiments, referring to FIG. 5 to FIG. 7, the battery module 20 includes a first separation piece 28 and a second separation piece 29, and along the first direction X, the first battery group 21, the second battery group 22, the first holder 23, the second holder 24, the third holder 25, the fourth holder 26, the first busbars 271 and the second busbars 272 are all disposed between the first separation piece 28 and the second separation piece 29.

In some embodiments, referring to FIG. 5 to FIG. 7, the first separation piece 28 and the second separation piece 29 are polycarbonate (PC) pieces.

In some embodiments, referring to FIG. 3, FIG. 5 and FIG. 6, along the first direction X, at least a portion of the heating apparatus 50 is disposed between the first battery group 21 and the second battery group 22. The thermally conductive adhesive 40 is connected to the first battery group 21 and the second battery group 22. The heating apparatus 50 is disposed between the first battery group 21 and the second battery group 22 along the first direction, which is conducive to making the first battery group 21 and the second battery group 22 more uniformly heated, and is conducive to improving the temperature uniformity effect. The first battery group 21 and the second battery group 22 are both connected to the thermally conductive adhesive 40, which is conducive to further improving heat conduction efficiency among the heating apparatus 50, the first battery group 21 and the second battery group 22. The thermally conductive adhesive 40 wraps the first battery group 21, the heating apparatus 50 and the second battery group 22, which is conducive to improving the temperature uniformity effect of the first battery group 21 and the second battery group 22.

In the embodiments where the heating apparatus 50 includes the insulation film 51, the resistance wire 52 and the current interruption assembly 53, along the first direction X, at least a portion of the insulation film 51 is disposed between the first battery group 21 and the second battery group 22.

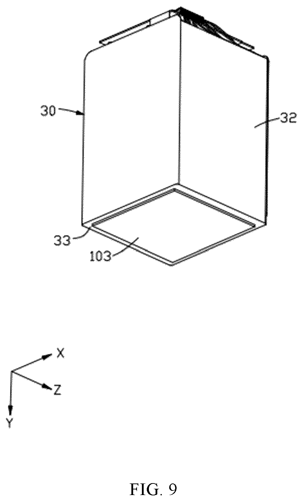

In some embodiments, referring to FIG. 3, and FIG. 8 to FIG. 10, the insulator 30 wraps at least a portion of the battery module 20 and at least a portion of the heating apparatus 50. The insulator 30 includes a first portion 31, a second portion 32, and a third portion 33 sequentially arranged along the second direction Y, along the second direction Y, the first portion 31 is located on a side of the battery module 20, the third portion 33 is located on a side that is of the battery module 20 and that is back away from the first portion 31, and the first portion 31, the second portion 32, and the third portion 33 enclose to form the first space 30a.

The insulator 30 wraps at least a portion of the battery module 20 and at least a portion of the heating apparatus 50, which is conducive to binding the battery module 20, the heating apparatus 50 and the thermally conductive adhesive 40, improving the stability of the connection among the battery module 20, the heating apparatus 50 and the thermally conductive adhesive 40, allowing the thermally conductive adhesive 40 to maintain a shape before curing, reducing a risk of adhesive overflowing, and reducing a risk of the insulator 30 falling off from the battery module 20.

In some embodiments, the insulator 30 does not wrap at least a portion of the first circuit board 60.

In some other embodiments, referring to FIG. 2, FIG. 3, and FIG. 8 to FIG. 10, the insulator 30 wraps at least a portion of the battery module 20, at least a portion of the heating apparatus 50 and at least a portion of the first circuit board 60. The insulator 30 includes a first portion 31, a second portion 32, and a third portion 33 sequentially arranged along the second direction Y, along the second direction Y, the first portion 31 is located on a side that is of the first circuit board 60 and that is back away from the battery module 20, the third portion 33 is located on a side that is of the battery module 20 and that is back away from the first circuit board 60, and the first portion 31, the second portion 32, and the third portion 33 enclose to form the first space 30a.

The insulator 30 wraps at least a portion of the battery module 20, at least a portion of the heating apparatus 50 and at least a portion of the first circuit board 60, which is conducive to binding the battery module 20, the heating apparatus 50, the first circuit board 60 and, the thermally conductive adhesive 40, improving the stability of the connection among the battery module 20, the heating apparatus 50, the first circuit board 60, and the thermally conductive adhesive 40, allowing the thermally conductive adhesive 40 to maintain the shape before curing, reducing the risk of adhesive overflowing, and reducing the risk of the insulator 30 falling off from the battery module 20.

In some embodiments, the first portion 31, the second portion 32, and the third portion 33 are formed in one piece.

In some embodiments, the first portion 31, the second portion 32, and the third portion 33 are all annular.

In some embodiments, the insulator 30 is a heat shrinkable film. The heat shrinkable film 30 is not tightly bonded to the inner wall of the housing 10, which is conducive to disassembling the insulator 30 and the battery module 20 from the housing 10 without destroying the thermally conductive adhesive 40 when required, and improving the disassembly efficiency of the battery module 20 and the insulator 30.

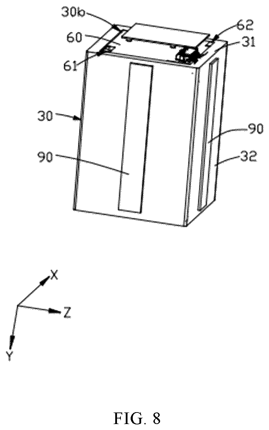

In some embodiments, referring to FIG. 8, the first portion 31 and a portion of an edge of the first circuit board 60 enclose to form a first through hole 61, and the first through hole 61 communicates with an interior and an exterior of the first space 30a. The arranged first through hole 61 is provided for filling the thermally conductive adhesive 40 into the first space 30a, and also for high-temperature gas in the first space 30a to be discharged, thereby being conducive to filling the adhesive and relieving the pressure.

In some embodiments, referring to FIG. 8, the first portion 31 and an other portion of the edge of the first circuit board 60 enclose to form a second through hole 62, and the second through hole 62 communicates with an interior and an exterior of the first space 30a. The arranged second through hole 62 is provided for filling the thermally conductive adhesive 40 into the first space 30a, and also for high-temperature gas in the first space 30a to be discharged, thereby further being conducive to filling the adhesive and relieving the pressure.

In some embodiments, referring to FIG. 8, the first through hole 61 and the second through hole 62 are diagonally disposed on the first circuit board 60, which is conducive to allowing adhesive filling and pressure relief to be more uniform.

In some embodiments, referring to FIG. 8 to FIG. 10, the insulator 30 includes a first opening 30b and a second opening 30c arranged in the second direction Y, and the first opening 30b and the second opening 30c both communicate with the first space 30a. The battery pack 100 includes a structural component 103, and the structural component 103 is connected to the insulator 30 and seals the second opening 30c. The first opening 30b and the second opening 30c provided are conducive to realizing the wrapping of the insulator 30 to the battery module 20, the first opening 30b is conducive to providing access to structures such as connecting wires used by the battery module 20 for being connected to other components, and the structural component 103 seals the second opening 30c, which is conducive to reducing the probability of overflowing of the thermally conductive adhesive 40.

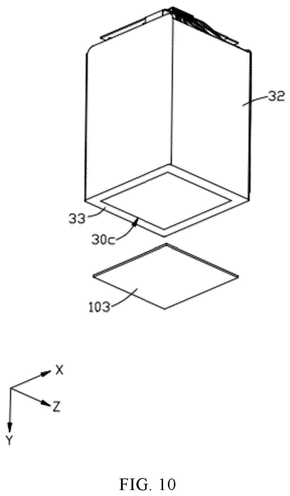

In some embodiments, referring to FIG. 8 and FIG. 10, the first portion 31 encloses to form the first opening 30b, and the third portion 33 encloses to form the second opening 30c.

In some embodiments, the structural component 103 is a component with better elasticity, such as foam, rubber, or other components, and the structural component 103 makes contact with the housing 10, which is conducive to playing a role in buffering the battery module 20, and protecting the battery module 20.

In some embodiments, the first battery group 21 includes a plurality of first battery assemblies 211, the plurality of first battery assemblies 211 are arranged along the third direction Z, and each first battery assembly 211 includes a plurality of first batteries 2111 arranged along the second direction Y. Along an opposite direction of the second direction Y, the thermally conductive adhesive 40 does not extend beyond the first batteries 2111 of the first battery assemblies 211 that are closest to the first circuit board 60. The thermally conductive adhesive 40 does not extend beyond the first batteries 2111 closest to the first circuit board 60 along the opposite direction of the second direction Y, which is conducive to reducing weight on one hand, and reducing the risk of adhesive overflowing on the other hand.

In some embodiments, in the opposite direction of the second direction Y, the thermally conductive adhesive 40 does not extend beyond the second batteries 2211 of the second battery assemblies 221 that are closest to the first circuit board 60. The thermally conductive adhesive 40 does not extend beyond the second batteries 2211 closest to the first circuit board 60 along the opposite direction of the second direction Y, which is conducive to reducing the weight on one hand, and reducing the risk of adhesive overflowing on the other hand.

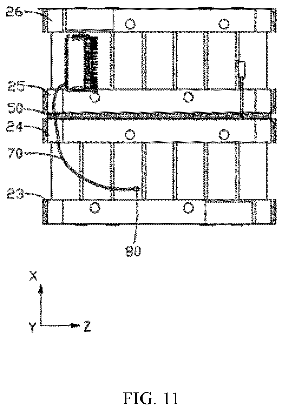

In some embodiments, referring to FIG. 11, the battery pack 100 includes a connecting piece 70 and a temperature sensor 80, and the connecting piece 70 is connected to the first circuit board 60 and the temperature sensor 80. The temperature sensor 80 is configured to detect a temperature of the battery module 20. The temperature sensor 80, after detecting the temperature of the battery module 20, transmits a detection information via the connecting piece 70 to the first circuit board 60. The first circuit board 60 can control an operation of the heating apparatus 50 according to the received detection information of the temperature sensor 80, which is conducive to realizing automatic adjustment of the heating apparatus 50.

In some embodiments, the temperature sensor 80 is a negative temperature coefficient (NTC) sensor.

In some embodiments, the temperature sensor 80 is a positive temperature coefficient (PTC) sensor.

In some embodiments, the first circuit board 60 and the battery module 20 are arranged along the second direction Y, and in the second direction Y, the temperature sensor 80 is disposed between the battery module 20 and the first circuit board 60. The temperature sensor 80 is disposed between the battery module 20 and the first circuit board 60 along the second direction Y, which is conducive to reducing a risk of the temperature sensor 80 being subjected to impact and extrusion, and improving protection for the temperature sensor 80.

In some embodiments, referring to FIG. 11, the battery module 20 includes a first holder 23 and a second holder 24 connected to each other, the first holder 23 and the second holder 24 are arranged along the first direction X, the plurality of first batteries 2111 are disposed between the first holder 23 and the second holder 24, and any two adjacent first batteries 2111 are separated. The temperature sensor 80 is disposed between two adjacent first batteries 2111, and along the opposite direction of the second direction Y, the temperature sensor 80 does not extend beyond the first holder 23 and the second holder 24.

The temperature sensor 80 does not extend beyond the first holder 23 and the second holder 24 along the opposite direction of the second direction Y, and when the battery pack 100 and other components collide and impact, the first holder 23 and the second holder 24 make contact with other components prior to the temperature sensor 80, which is further conducive to reducing the risk of the temperature sensor 80 being subjected to impact and extrusion, and improving the protection for the temperature sensor 80.

In some embodiments, a number of temperature sensors 80 is one.

In some other embodiments, the number of temperature sensors 80 is two or more.

In some embodiments, at least a portion of the temperature sensor 80 is disposed between gaps of two adjacent first batteries 2111.

In some embodiments, a temperature sensor 80 is also disposed between the gaps of two adjacent second batteries 2211.

In some embodiments, the first circuit board 60 is connected to a plurality of sampling wires (not shown), and the sampling wires are configured to detect information such as current, voltage, resistance of the first batteries 2111 and the second batteries 2211.

In some embodiments, the temperature sensor 80 is connected to the thermally conductive adhesive 40. The thermally conductive adhesive 40 is connected to the plurality of first batteries 2111 and the plurality of second batteries 2211 to play a role in equalizing the temperature, and the temperature sensor 80 is connected to the thermally conductive adhesive 40 connected to the plurality of first batteries 2111, which is conducive to improving accuracy of temperature measurement.

In some embodiments, referring to FIG. 3 and FIG. 8, the battery pack 100 further includes a resilient member 90, and the resilient member 90 is disposed between the housing 10 and the insulator 30. The resilient member 90 is conducive to playing a role in buffering the battery pack 100 and protecting the battery pack 100.

In some embodiments, one or more resilient members 90 are disposed between the battery pack 100 and the first wall 11.

In some embodiments, one or more resilient members 90 are disposed between the battery pack 100 and the second wall 12.

In some embodiments, one or more resilient members 90 are disposed between the battery pack 100 and the third wall 13.

In some embodiments, one or more resilient members 90 are disposed between the battery pack 100 and the fourth wall 14.

In some embodiments, the resilient members 90 are components with good resilience, such as foam and adhesive strips, which is conducive to playing a role in buffering the battery pack 100 and protecting the battery pack 100.

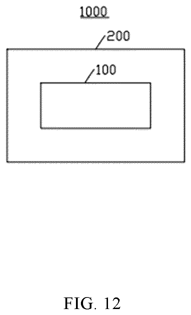

Referring to FIG. 12, an embodiment of this application further provides an electric device 1000. The electric device 1000 includes the battery pack 100 according to any one of the above embodiments. The electric device 1000 employs the technical solution disclosed in any one of the embodiments of the battery pack 100, and therefore, achieves at least the beneficial effects brought by the technical solution in any one of the embodiments of the battery pack 100, the details of which are omitted here.

In some embodiments, referring to FIG. 12, the electric device 1000 further includes a device body 200, and the battery pack 100 is mounted to the device body 200.

The electric device 1000 may be an unmanned aerial vehicle, an electric two-wheeler, a cleaning robot, an energy storage device, an electric tool, or the like.

In addition, a person of ordinary skill in the art understands that the above embodiments are merely intended to illustrate this application, but not intended to limit this application. Any and all appropriate modifications and changes made to the embodiments without departing from the substantial scope of this application still fall within the protection scope of this application.

## Claims

1. A battery pack(100), **characterized by** comprising:
a housing(10);
a battery module(20) disposed in the housing(10);
an insulator(30) disposed in the housing(10), the insulator(30) is provided with a first space(30a), at least a portion of the battery module(20) is accommodated in the first space(30a); and
a thermally conductive adhesive(40) disposed in the first space(30a), the thermally conductive adhesive(40) is formed by curing a flowable thermally conductive material injected into the first space(30a), and the thermally conductive adhesive(40) is connected to the insulator(30) and the battery module(20).

2. The battery pack(100) according to claim 1, further comprising a heating apparatus(50), the heating apparatus(50) is disposed in the housing(10), and at least a portion of the heating apparatus(50) is disposed in the first space(30a), the thermally conductive adhesive(40) is connected to the heating apparatus(50).

3. The battery pack(100) according to claim 2, further comprising a first circuit board(60), the first circuit board(60) is connected to the battery module(20), and the first circuit board(60) is connected to the heating apparatus(50).

4. The battery pack(100) according to claim 3, wherein the battery module(20) comprises a first battery group(21), and the first battery group(21) comprises a plurality of first batteries(2111); and
the first battery group(21) and the heating apparatus(50) are arranged along a first direction(X), the first circuit board(60) and the first battery group(21) are arranged along a second direction(Y), and the second direction(Y) is perpendicular to the first direction(X).

5. The battery pack(100) according to claim 4, wherein the battery module(20) comprises a second battery group(22), and the second battery group(22) comprises a plurality of second batteries(2211);
along the first direction(X), at least a portion of the heating apparatus(50) is disposed between the first battery group(21) and the second battery group(22); and
the thermally conductive adhesive(40) is connected to the first battery group(21) and the second battery group(22).

6. The battery pack(100) according to claim 4 or 5, wherein the insulator(30) comprises a first portion(31), a second portion(32), and a third portion(33) sequentially arranged along the second direction(Y);
along the second direction(Y), the first portion(31) is located on a first side of the battery module(20), the third portion(33) is located on a second side of the battery module(20), the second side of the battery module being the side facing away from the first side; and the first portion(31), the second portion(32), and the third portion(33) enclose to form the first space(30a).

7. The battery pack(100) according to claim 4 or 5, wherein the insulator(30) wraps at least a portion of the first circuit board(60); and
the insulator(30) comprises a first portion(31), a second portion(32), and a third portion(33) sequentially arranged along the second direction(Y); along the second direction(Y), the first portion(31) is located on a side of the first circuit board(60) facing away from the battery module(20), the third portion(33) is located on a side of the battery module(20) facing away from the first circuit board(60); and the first portion(31), the second portion(32), and the third portion(33) enclose to form the first space(30a).

8. The battery pack(100) according to claim 7, wherein the first portion(31) and a portion of an edge of the first circuit board(60) enclose to form a first through hole(61), the first portion(31) and an other portion of the edge of the first circuit board(60) enclose to form a second through hole(62), and the first through hole(61) and the second through hole(62) both communicate with an interior and an exterior of the first space(30a).

9. The battery pack(100) according to claim 4 or 5, wherein the insulator(30) comprises a first opening(30b) and a second opening(30c) arranged along the second direction(Y), and the first opening(30b) and the second opening(30c) both communicate with the first space(30a); and
the battery pack(100) further comprises a structural component(103), and the structural component(103) is connected to the insulator(30) and seals the second opening(30c).

10. The battery pack(100) according to claim 4 or 5, wherein the first battery group(21) comprises a plurality of first battery assemblies(211), the plurality of first battery assemblies(211) are arranged along a third direction(Z), each first battery assembly(211) comprises a plurality of first batteries(2111) arranged along the second direction(Y), and the first direction(X), the second direction(Y), and the third direction(Z) are perpendicular to one another; and
in a direction opposite to the second direction(Y), the thermally conductive adhesive(40) does not extend beyond the first batteries(2111) of the first battery assemblies(211) that are closest to the first circuit board(60).

11. The battery pack(100) according to claim 3, wherein the battery pack(100) comprises a connecting piece(70) and a temperature sensor(80); and the connecting piece(70) is connected to the first circuit board(60) and the temperature sensor(80), the first circuit board(60) and the battery module(20) are arranged along a second direction(Y); and
along the second direction(Y), the temperature sensor(80) is disposed between the battery module(20) and the first circuit board(60), the temperature sensor(80) is connected to the thermally conductive adhesive(40).

12. The battery pack(100) according to claim 11, wherein the battery module(20) comprises a first battery group(21), the first battery group(21) is connected to a first holder(23) and a second holder(24), and the first battery group(21) comprises a plurality of first batteries(2111);
the first holder(23) and the second holder(24) are arranged along a first direction(X), the plurality of first batteries(2111) are disposed between the first holder(23) and the second holder(24), and any two adjacent first batteries(2111) are spaced apart from each other; and
the temperature sensor(80) is disposed between two adjacent first batteries(2111), and along the direction opposite to the second direction(Y), the temperature sensor(80) does not extend beyond the first holder(23) and the second holder(24).

13. The battery pack(100) according to claim 3, wherein the battery module(20) comprises a first battery group(21), and the first battery group(21) comprises a plurality of first batteries(2111); and the heating apparatus(50) comprises:
an insulation film(51), the first battery group(21) and the insulation film(51) are arranged along the first direction(X);
a resistance wire(52), at least a portion of the resistance wire(52) is disposed in the insulation film(51), and the resistance wire(52) is connected to the first circuit board(60); and
a current interruption assembly(53), the current interruption assembly(53) is connected to the resistance wire(52), and the current interruption assembly(53) is configured to disconnect in response to a temperature of the battery module(20) reaching a first threshold, so as to interrupt a connection of the resistance wire(52) and the first circuit board(60).

14. The battery pack(100) according to any one of claims 1 to 13, wherein the insulator(30) comprises a heat shrinkable film.

15. An electric device(1000), **characterized in that** the electric device(1000) comprises the battery pack(100) according to any one of claims 1 to 14.
